# EUROPEAN PATENT APPLICATION

(11) **EP 1 591 954 A1**
(43) Date of publication of application: **02.11.2005**
(21) Application number: 04708505.5
(22) Date of filing: 05.02.2004
(51) Int. Cl.: G06T 1/20, G06T 1/00, H04N 9/64

(54) **IMAGE PROCESSING DEVICE**

(30) Priority: 05.02.2003 JP 2003027860
(71) Applicant: SEIKO EPSON CORPORATION, Shinjuku-ku, Tokyo 163-0811 (JP)
(72) Inventor: FUKASAWA, Kenji, c/o Seiko Epson Corporation, Suwa-shi, Nagano 3928502 (JP); YAMADA, Takashi, c/o Seiko Epson Corporation, Suwa-shi, Nagano 3928502 (JP)
(74) Representative: Winter, Brandl, Fürniss, Hübner Röss, Kaiser, Polte Partnerschaft Patent- und Rechtsanwaltskanzlei
(86) International application number: PCT/JP2004/001222
(87) International publication number: WO 2004/070657

(57) **Abstract**

An object of the present invention is to reflect the photographer's intention on image processing. A computer PC as image processing device acquires metadata along with image data to be processed. The metadata includes comment data added later by the photographer of the image, which represents the content of the image data in a human language. The image processing device analyzes the comment data by the aid of an analysis dictionary DB 15 to set an image processing parameter on which the content of the comment data is reflected. Using this image processing parameter enables the image processing to reflect the intention of the photographer.

## Description

### Field of the Invention

The present invention relates to a technique for controlling a content of image processing according to an image represented by image data.

### Description of the Related Art

A method is coming into widespread use which outputs image data as an image by using an image output device such as printer, the image data being generated by an imaging device such as digital still camera (DSC) and scanner. Such an image output device may analyze the image data and then perform automatic image processing based on the analysis result in order to improve the image quality. Such image processing, for example, includes adjusting color balance to express appropriate hue of skin in an image of person.

Recently, there is an approach that records information such as a model of imaging device and imaging condition along with the image data and uses the information for the image processing, for example, in order to improve color reproducibility of object.

However, the automatic image processing may not sufficiently reflect the photographer's intention. For example, for the image which includes a person against scenery, it is not necessarily appropriate to perform image processing for scenery on the image even if the image includes mostly of scenery or was taken in a so-called shooting mode for scenery.

Such a problem is common in various aspects of image output including an image displayed on a display etc. as well as an image printed. In addition, the problem may occur in an image produced by computer graphics as well as by imaging an object. It is desired to reflect on the image processing the intention not only when taking or generating the image but also when using the image later.

### SUMMARY OF THE INVENTION

From the above viewpoint, an object of the present invention is to provide an image processing technique for reflecting the intention at the time of taking, generating, or using an image.

To resolve at least part of the above problems, the present invention applies the following configuration to an image processing device for performing image processing on image data. The image processing device of the present invention acquires comment data containing a description of the image data in a human language, and the image data. The comment data may be stored in a same file as the image data or may be stored in a different file from that of the image data. The image data may include a still image or moving image. The image processing device analyzes the descriptive content of the comment data acquired in this manner to set an image processing parameter for the image processing based on the analysis result. Then, the image processing device uses the image processing parameter to perform the image processing on the image data.

In the present invention, the image processing parameter may include parameters for adjustment of contrast, brightness, color balance, white balance, chromaticness, and sharpness, and memory color.

The comment data is described in a human language, and may reflect the intention of a person who takes, generates, or uses the image data. The present invention uses such comment data, and thereby ensuring the image processing that reflects the intention.

In the present invention, the image processing parameter may be set in a variety of aspects. In one example, a plurality of image processing modes are provided in advance, that is, respective sets of image processing parameters are stored in association with the plurality of image processing modes. In a first aspect, a method that selects one of the image processing modes based on the analysis result may be employed. In a second aspect, a method that combines at least two sets of image processing parameters based on the analysis result to set the image processing parameters may be employed. These aspects, for example, can be achieved by evaluating based on the analysis result of comment data whether or not the image processing modes provided in advance are appropriate, and then selecting the image processing mode or combining the image processing modes based on the evaluation.

In another example, the image processing parameters may be set independent of the image processing modes. For example, the image processing parameters may be set so that they have an effect according to the meaning of adjective or adjectival noun contained in the comment data. In a concrete example, if there is an expression such as "Kirei (beautiful)" or "Senmei (brilliant)," the image processing parameters are set so as to emphasize the chromaticness.

In the present invention, the comment data may be analyzed based on a predetermined keyword contained in the comment. In a language system such as Japanese where a letter string is contiguous, the keyword may be extracted by a morphological analysis. The image processing parameter can be set with relative ease by storing in advance the image processing parameter directly or indirectly associated with the keyword, and referring to the association for the keyword extracted from the comment data.

The keyword may include at least one of time information that represents time corresponding to an image represented by the image data and a word relating to the image. The time information may include a word representing certain time of a day such as "Asa (morning)" and "Yugata (evening)" and a word representing a season. The word relating the image may include proper nouns, e.g. a place name such as "Nagoya," a personal name such as "Tanaka," a notable site or place of scenic beauty such as "Fujisan (Mt. Fuji)," a landmark such as "Tokyo Tower," and names of various industrial goods and art works. The word relating the image, or keyword, may further include a word describing scenery such as "Aozora (blue sky)" and "Yuyake (sunset)" and a word describing a person such as "Joshidaisei (female college student)" and "Sakkasenshu (soccer player)."

The keyword and image processing parameter may be associated in a variety of aspects. In a first aspect, the image processing parameter is directly associated with each keyword. This aspect advantageously ensures flexible setting for each keyword. In a second aspect, the image processing mode is associated with each keyword, and thereby the image processing parameter is indirectly associated with the keyword. For example, the image processing mode for scenery may be associated with the keyword of place name, and the image processing mode for person may be associated with the keyword of personal name. In a third aspect, the keywords are classified by groups of place name, personal name, and the like, and are associated with the respective image processing parameters by the groups. The second and third aspects advantageously enable a large number of keywords to be easily associated with the respective image processing parameters. The first through third aspects may be used alone or in combination.

In order to set the image processing parameter, a related word, which is used along with the keyword, may be taken into account. For example, the related word may be directly or indirectly associated with the image processing parameter, and the image processing parameter may be set by referring to the association for the related word corresponding to the keyword.

The related word is a word for emphasizing or modifying the keyword. For example, the related word may include a term of respect for a personal name. The related word may also include adjectives and adjectival nouns. For example, the related word may include words such as "Utsukushii (beautiful)" and "Soudaina (magnificent)" for a place name. The related word may also include marks such as quotation mark and exclamation mark.

If a plurality of keywords are contained in the comment data, it is preferable to evaluate each of the keywords and then reflect the evaluation result on setting of image processing parameter. For example, the evaluation may be made based on the number of keywords contained in the comment data. If the comment data contains the keywords relating to person more than those relating to place name, the evaluation method may preferentially apply the image processing parameter for person. If a plurality of modes for image processing are provided in advance, one of the modes may be selected based on the evaluation of keyword, or the image processing parameter of each mode may be weighted according to the evaluation to be combined together. The presence or absence of related word described above or the content of related word may be reflected on the evaluation of keyword.

The method of evaluating a keyword may include providing an evaluation value for each classification of keyword such as place name and personal name, and calculating the evaluation values of the keywords contained in the comment data for each classification. If the related word is taken into account, a separate evaluation value may be provided according to the presence or absence of related word or the content of related word, or the evaluation value of keyword may be multiplied by a coefficient.

A display format in which the letter string of the keyword is displayed may be reflected on the evaluation of keyword. The display format may include a font, font size, and font color of the keyword. If only a particular keyword is expressed in a different font, font size, or font color, the evaluation value may be increased based on the determination that the keyword is emphasized intentionally.

In the present invention, the image processing parameter may be set by reflecting image information representing a generation condition of the image data or an analysis result of the image data as well as the comment data. For example, if the image data was taken by a camera, the generation conditions of the image may include shooting date and time, model of the camera, shooting mode, shutter speed, exposure, and presence or absence of filter. The analysis result of image data, for example, includes the number of colors in the image data and a spatial frequency of the image data. Taking into account such conditions added by the device as well ensures more appropriate image processing.

The generation condition may be reflected in a variety of aspects. For example, the image processing parameter may be set based on the analysis result, and then may be corrected based on the generation condition. If the generation condition includes information representing the scene of the image and information representing the shooting condition, the correction may be made according to a result of a predetermined calculation performed using an image processing parameter that is set based on the scene and an image processing parameter that is set based on the shooting condition. The predetermined calculation may be weighted average calculation or simple average calculation of both the image processing parameters.

In the present invention, one of a first mode and second mode may be selected based on a predetermined condition to set the image processing parameter. The first mode uses one of the analysis result and the generation condition for the setting of image processing parameter. The second mode uses both the analysis result and the generation condition for the setting of image processing parameter. The predetermined condition may include specification made by the user.

In the present invention, the comment data may be in a variety of formats. The comment data may be metadata associated with the image data. The metadata is a general term for additional information that explains a digitalized photo, which includes a creator, created date and time, object information input by the user, and the like. Therefore, the object information may be used as the comment data according to the present invention. The metadata may be recorded in a variety of formats. For example, it may be recorded in a header of the image data or in a different file from that of the image data.

The comment data may be a descriptive sentence contained in a document file including the image data. The descriptive sentence, for example, includes a descriptive sentence contained in a HTML file for composing a Web page and a descriptive sentence in a document created by word-processing software. For example, if there are a plurality of image data or descriptive sentences, a descriptive sentence located near a description for specifying insert of image data or a title of the document may be extracted as the comment data.

The present invention is not limited to the image processing device as described above, but may be configured as an image processing method using a computer. The present invention may be also configured as an image processing parameter setting device or method which automatically sets an image processing parameter for image processing. Additionally, the present invention may be configured as a computer program for causing a computer to perform the image processing or the setting of image processing parameter or as a computer-readable recording medium that stores therein such a computer program. Such a recording medium may include a variety of computer-readable media such as flexible disk, CD-ROM, DVD, magneto-optics disc, IC card, ROM cartridge, punched card, printed medium with barcodes or other codes printed thereon, internal storage device (memory such as RAM and ROM) and external storage device of the computer and the like.

### BRIEF DESCRIPTION OF THE DRAWINGS

Fig. 1 is a schematic diagram illustrating a general configuration of an image output system as one embodiment.
Fig. 2 is a schematic diagram illustrating a data structure of an analysis dictionary DB 15.
Fig. 3 is a schematic diagram illustrating a structure of an image processing parameter DB 16.
Fig. 4 is a flowchart of image processing.
Fig. 5 is a flowchart of processing for analyzing comment data.

### DESCRIPTION OF THE PREFERRED EMBODIMENTS

### A. System Configuration:

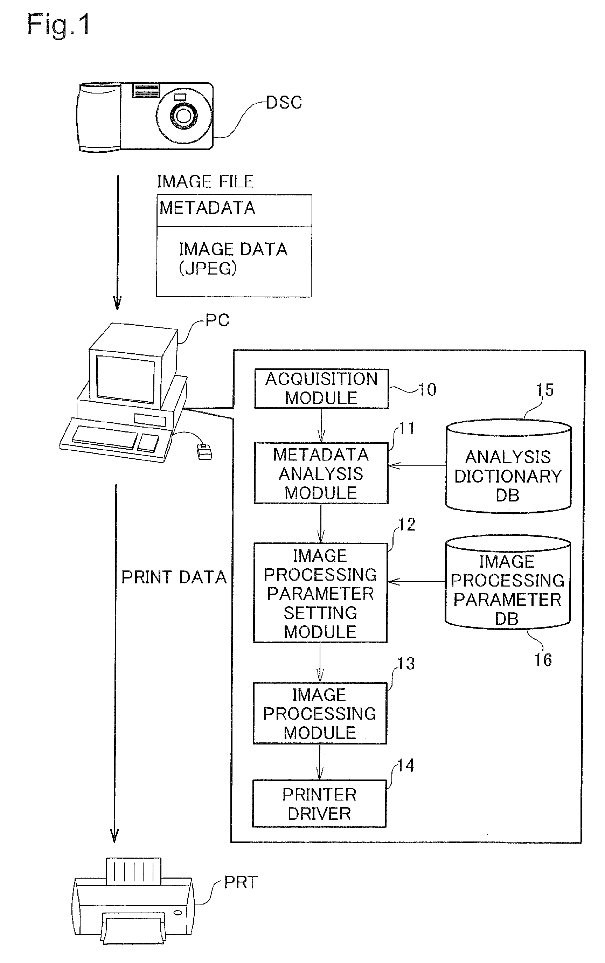

Fig. 1 is a schematic diagram illustrating a general configuration of an image output system as one embodiment. The system includes a digital camera DSC as an imaging device, a personal computer PC as an image processing device, and a printer PRT as an image output device. Instead of the printer PRT, an image display device such as a display and projector may be used as the image output device.

The digital camera DSC generates an image file according to user's shooting operation. The image file is transferred via a medium or communication to the computer PC. As shown in Fig. 1, the image file includes additional information called as metadata, and image data. In this embodiment, the image data is in JPEG format, but may be in another format. The image data and metadata may be stored in a single file or may be stored respectively in separate files that are associated with each other.

The metadata is configured as a header of the image data, and includes shooting conditions such as shooting date and time, weather, and shutter speed, and comment data that the user added later. The comment data represents a descriptive sentence in which the content of the image data is explained in a human language. The shooting conditions are automatically generated by the digital camera DSC at the time of shooting. The comment data may be recorded by using the digital camera DSC, or may be added after the image file is transferred to the computer PC.

In addition to above information, the metadata includes control data for controlling the contents of image processing to be performed on the image data when the image is output, such as color space parameter and color correction parameter. The color space parameter is data for transmitting color reproduction characteristics of the imaging device to the output device so as to achieve accurate color reproduction of the object. The color space parameter includes a gamma correction value and a parameter for specifying a color space conversion method according to characteristics of the imaging device. The color correction parameter is data for transmitting the photographer's intention and characteristics of the digital camera DSC, and includes parameters related to contrast, brightness, color balance, white balance, chromaticness, sharpness, memory color, and the like. The memory color represents a color used as a reference to adjust hue of the image data.

Once the personal computer PC reads the image file, it analyzes the contents of the image file and performs image processing specified by the control data on the image data to cause the printer PRT to print the image. The personal computer PC includes software installed therein for achieving such processing. As well known, the software can be installed into the personal computer PC via a recording medium such as a CD-ROM or a network. Part or all of image processing functions performed by the personal computer PC may be performed by the printer PRT.

Fig. 1 also illustrates functional blocks for achieving the image processing. These functional blocks are configured as the above software, but may be configured as hardware. An acquisition module 10 acquires the image file. A metadata analysis module 11 analyzes the metadata contained in the image file. For the comment data contained in the metadata, the metadata analysis module 11 refers to an analysis dictionary DB (database) 15 for analyzing words. An image processing parameter setting module 12 analyzes the image data and sets parameters for image processing based on the analysis result of the metadata. In this embodiment, the image processing parameters are set by combining sets of image processing parameters for a plurality of image processing modes, which are stored in advance within an image processing parameter DB 16. The image processing parameters, for example, include adjustment values of contrast, brightness, color balance, white balance, chromaticness, and sharpness, and memory color. An image processing module 13 performs image processing according to the image processing parameters.

A printer driver 14 converts the image-processed data into print data that can be handled by the printer PRT. The printer driver 14, for example, performs processing for adjusting the resolution of the image data, color conversion processing, halftone processing, and the like. The color conversion processing represents a processing for converting a color space of the image data defined by Red, Green, and Blue into another color space for the printer PRT defined by Cyan, Magenta, Yellow, and Black. The halftone processing is a conversion processing for expressing tone values of the image data by density of dots to be formed by the printer PRT. The printer PRT receives the print data generated by the printer driver 14 so as to print the image.

In this embodiment, once the user inputs a print command through the computer PC, the image processing is performed by the functional blocks described above, and then the print data is generated by the printer driver 14. Such a command may be divided into a command for performing the image processing and a print command for operating the printer driver 14.

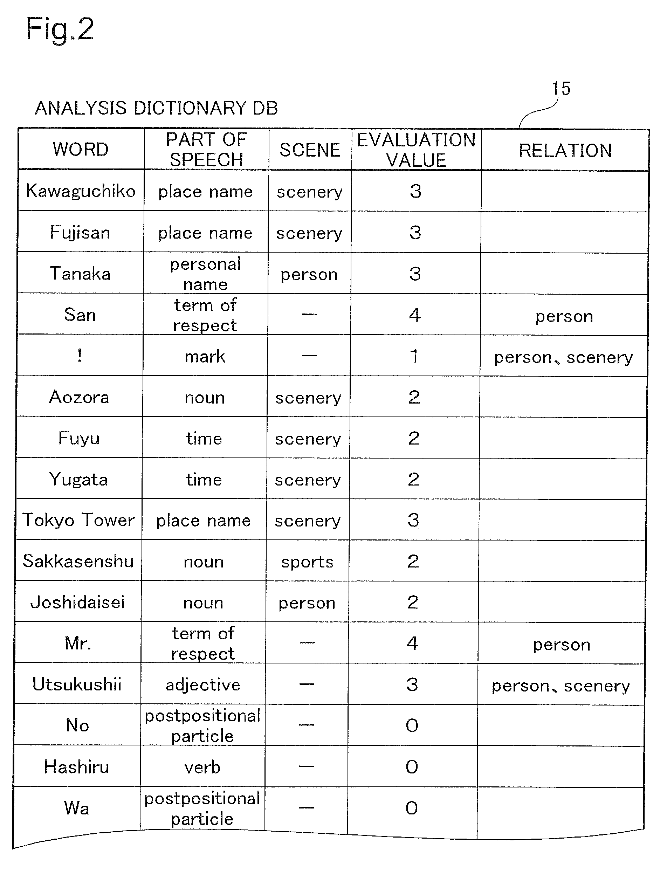

Fig. 2 is a schematic diagram illustrating data structure of the analysis dictionary DB 15. The analysis dictionary DB 15 is a database used to divide the comment data into words and then extract information useful for image processing. The analysis dictionary DB 15 may take the form of dictionary used for kana-kanji conversion in which information relating to image processing is associated with each word. As shown in Fig. 2, the kana-kanji conversion dictionary typically includes words and parts of speech. In this embodiment, the analysis dictionary DB 15 also includes three items of scene, evaluation value, and relation for each word.

The "scene" represents association to an image processing mode provided in advance. For example, if the comment data contains a word representing a place name "Kawaguchiko (Kawaguchi-lake)," the image processing mode for scenery is likely to be suitable, and therefore data "scenery" is set in the item of scene. The "scenery" does not necessarily be associated only with place names, but may be associated with a noun such as "Aozora (blue sky)" used to describe scenery, adjective, adjectival noun, and the like. Similarly, data "person" is set for a word representing a person.

The "evaluation value" is a weighting value representing the level of relation between each word and the corresponding scene. For example, if a common noun "Fuyu (winter)" is used in the comment data, the image is less likely to describe scenery than in the case of place name such as "Kawaguchiko (Kawaguchi-lake)." Therefore, in this embodiment, the evaluation value of "Fuyu (winter)" is set to "2" lower than the evaluation value "3" of "Kawaguchiko (Kawaguchi-lake)." Similarly, for the "person," a common noun such as "Joshidaisei (female college student)" has a lower evaluation value than a personal name. However, the evaluation value may be set arbitrarily, and thus the evaluation value of common noun need not necessarily be lower. A constant value need not be set for each part of speech such as common noun, personal name, and place name.

The "relation" is information representing the relation with another word, and corresponds to alternative information to the "scene." For example, a term of respect "San (Mr.)" is typically used along with a word representing a person. In this embodiment, words which are typically used along with another word are generically called as related words. The "relation" defines a scene for which such a related word may be used. For example, the "person" is set as a related scene in the item "relation" for the term of respect "San" used for a personal name. The evaluation value is taken into account if the related word is used along with a word corresponding to the scene set in the item "relation." The related words include a variety of suffixes and prefixes including terms of respect such as "San (Mr.)." In addition, the related words include adjectives such as "Utsukushii (beautiful)" and adjectival nouns. The related words may include marks such as an exclamation mark, question mark, and quotation mark.

In this embodiment, the evaluation is set to 0 for postpositional particles such as "No" and "Wa" and for verbs such as "Hashiru (run)" since they are considered to be little related with the scene. Even for these parts of speech, the data such as scene, evaluation value, and relation may be set if the word is closely related to the scene. In this embodiment, words with their scene, evaluation value, or relation specified corresponds to keywords for setting the image processing parameters.

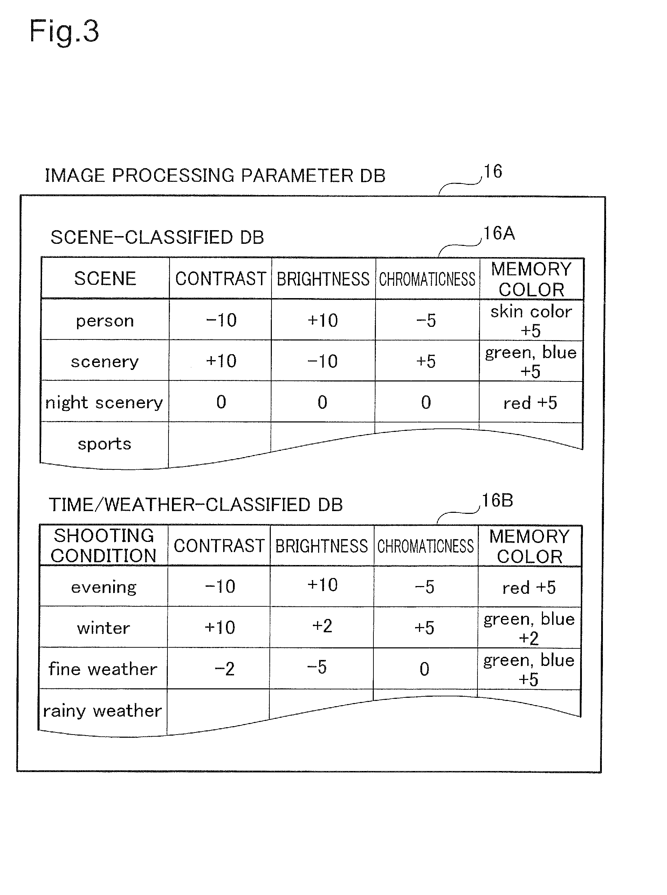

Fig. 3 is a schematic diagram illustrating the structure of the image processing parameter DB 16. In this embodiment, the image processing parameter DB 16 includes two databases, i.e. a scene-classified DB 16A and time/weather-classified DB 16B. The scene-classified DB 16A is a database for providing image processing parameters for each scene, that is, for each image processing mode. In Fig. 3, the database is shown that provides adjustment values of contrast, brightness, and chromaticness, and memory color for scenes such as scenery, person, night scenery, and sports. An additional image processing parameter may be set according to the contents of image processing to be performed on the image data.

The time/weather-classified DB 16B, which is used along with the scene-classified DB 16A, provides image processing parameters for adjustment processing according to time, weather, etc. For example, even if applying the "scenery" mode in the scene-classified DB 16A, it may be preferable to change the image processing parameters according to the weather such as fine weather and rainy weather. In this manner, the time/weather-classified DB 16B can provide the image processing parameters to be applied according to the shooting condition. The example of Fig. 3 shows a database for providing the image processing parameters according to shooting time or seasons such as "evening" or "winter," and the image processing parameters according to weathers such as "fine weather" and "rainy weather."

The time/weather-classified DB 16B and scene-classified DB 16A are configured as an integrated database. These databases, for example, can be integrated by dividing the "scenery" of the scene-classified DB 16A into "evening scenery" and "winter scenery." However, separating the time/weather-classified DB 16B from the scene-classified DB 16A avoids redundant divisions such as "evening scenery" and "person in evening," and advantageously reducing the size of the entire image processing parameter DB 16.

### B. Image Processing:

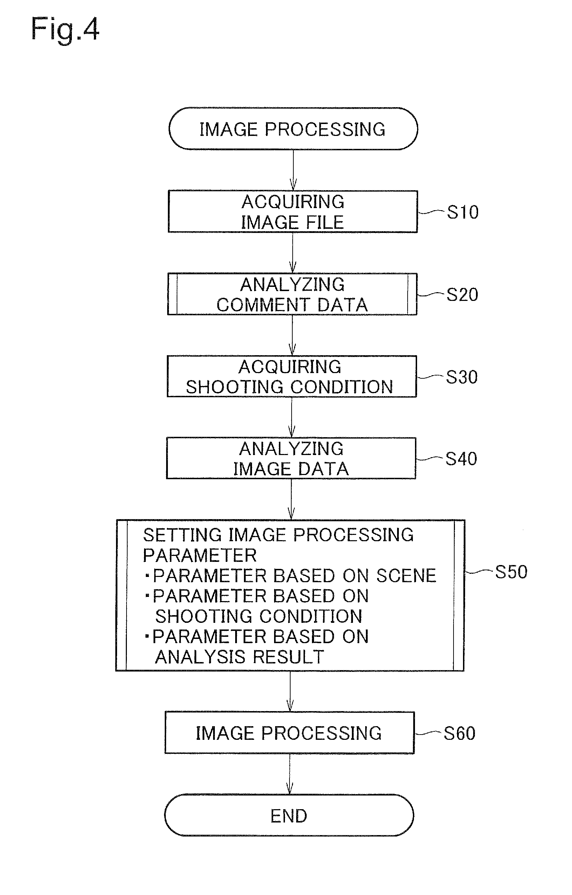

Fig. 4 is a flowchart of the image processing. The image processing is performed by the computer PC. In this processing, the computer PC first acquires the image file (step S10). The computer PC may read separately the image data and metadata. Then, the computer PC analyzes the comment data in the metadata (step S20).

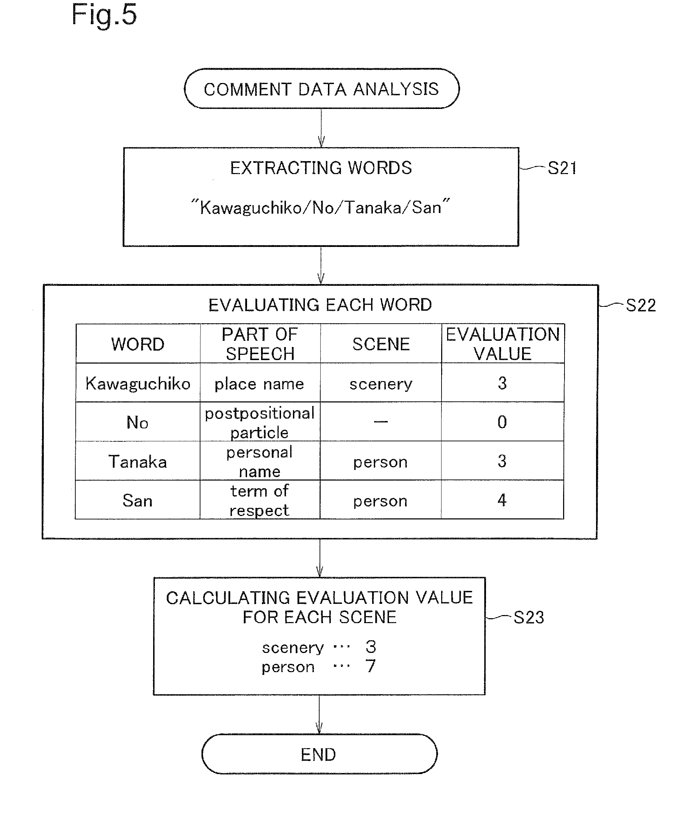

Fig. 5 is a flowchart of the processing for analyzing the comment data. Here, the details of the processing are described with taking as an example the case where the comment "Kawaguchiko No Tanaka San (Mr. Tanaka in Kawaguchi-lake)" is added. The computer PC extracts words from the comment data (step S21). If the comment data is described in Japanese, a morphological analysis known in the art of kana-kanji conversion may be used for this extraction. For example, words "Kawaguchiko," "No," "Tanaka," and "San" are extracted from the above comment as shown in a slash-separated fashion in Fig. 5.

Next, the computer PC evaluates each of the words based on the analysis dictionary DB 15 (step S22). The evaluation is executed by identifying the scene and evaluation value corresponding to each word. For example, the analysis dictionary DB 15 (see Fig. 2) shows that the word "Kawaguchiko" has the part of speech "place name," scene "scenery," and evaluation value "3." The term of respect "San (Mr.)" has the scene "person" and evaluation value "4" since it is used along with the word "Tanaka" representing the scene "person" registered in the item "relation."

Once the words have been evaluated, the computer PC calculates the sum of evaluation values for each scene (step S23). For the above comment data, the calculated evaluation values of scenery and person are equal to "3"and "7," respectively.

Once the analysis of comment data has been completed, the computer PC acquires the shooting condition from the metadata (step S30 of Fig. 4). Then, the computer PC analyzes the image data (step S40). This analysis is executed for setting of image processing parameters, and includes, for example, analyzing the distribution of hue, contrast, and the like of the image data.

The computer PC sets the image processing parameters (step S50) based on a variety of information acquired in the above steps, and then performs the image processing (step S60). The image processing parameter is set as a combination of three types of parameters based on the scene, shooting condition, and analysis result. The setting of parameters based on the analysis result may use a variety of methods conventionally used for automatic correction of image data, and is therefore not described in further detail.

The parameters based on the scene and the parameters based on the shooting condition can be set with reference to the image processing parameter DB 16 (Fig. 3). In this embodiment, the parameter based on the scene is calculated by summing the image processing parameters for the respective scenes according to the ratio of evaluation values determined through the analysis of the comment data. For example, in the case of the evaluation value "3" for scenery and evaluation value "7" for person as described above, the parameter for scenery and parameter for person are combined in the ratio of 3 to 7. Consequently, each of the image processing parameters based on the scene is calculated by the following equation: (Image processing parameter) = {3 x (Parameter for scenery) + 7 x (Parameter for person)} / 10. For the memory color, it is appropriate to calculate the evaluation value for each color component according to the above equation. In the above example, the calculated parameter is equal to (+5 x 0.7) for "skin color" component, which is a memory color for person. The calculated parameter is equal to (+5 x 0.3) for "green and blue" components, which are memory colors for scenery.

The parameters based on the shooting condition may be set with reference to the time/weather-classified DB 16B (Fig. 3). For example, if the shooting time is "evening," the parameters that are set for "evening" in the time/weather-classified DB 16B should be used. If the shooting condition such as "evening under fine weather in winter" corresponds to a plurality of items within the time/weather-classified DB 16B, an average value of parameters for the respective items should be used. Alternatively, the parameter is multiplied by a different weight for each shooting condition so as to calculate the sum of the weighted parameters as in the scene-classified DB 16A.

The parameter based on the scene, shooting condition, and analysis result are combined in a variety of manners. In this embodiment, the parameter based on the analysis result is used as a base, and correction is made based on the scene and shooting condition. That is, the parameter based on the analysis result is corrected based on the average of parameters based on the scene and the shooting condition. Different weighting factors may be used for the parameter based on the scene and the parameter based on the shooting condition.

The embodiment described above enables the image processing taking into account the contents of comment data to be performed on the image data, and therefore achieving the image processing reflecting the intention of a person such as photographer who gave the comment data.

### C. Modifications:

(1) In the above embodiment, the image processing parameters respectively corresponding to a plurality of scenes are combined (step S50 of Fig. 4). Instead of such a step, one of the scenes may be selected based on the analysis result of comment data. For example, if the evaluation value for scenery is equal to "3" and the evaluation value for person is equal to "7," the image processing parameters for the scene having the higher evaluation value, that is, image processing parameters for "person" may be used.
(2) In the above embodiment, the parameters based on the scene are processed separately from the parameters based on the shooting condition. Alternatively, the comment data and the shooting condition may be treated equally by identifying the "scene" based on the shooting condition. For example, if the shooting time is "night," the evaluation value set in advance for the scene "night scenery" in Fig. 3 may be applied. This enables both the comment data and shooting condition to be treated in an equal manner for setting of image processing parameters.
(3) In the above embodiment, the parameters based on the analysis result are used as bases to set the image processing parameters. Alternatively, the image processing parameter may be set based on the average or weighted sum of parameters based on the scene, shooting condition, and analysis result. All the three types of parameters need not necessarily be taken into account, and thus the parameter based on the shooting condition or based on the analysis result may be omitted.
(4) In the above embodiment, the image processing parameters are set indirectly by setting the "scene" to each word. Alternatively, the image processing parameters such as "contrast" and "brightness" may be set directly for each word within the analysis dictionary DB 15. This enables the image processing parameters to be set flexibly for each word. For example, blue-based image processing and green-based image processing may be performed on "Kawaguchiko (Kawaguchi-lake)" and "Fujisan (Mt. Fuji)," respectively. The analysis dictionary DB 15 may include both words for which the scene is set and words for which the image processing parameters are set.
(5) On the evaluation of each word during the analysis of comment data (step S22 of Fig. 5), a display format of the word such as font, font size, and font color may be reflected. If only a particular word is expressed in a different font, font size, or font color, the evaluation value may be increased based on the determination that the word is emphasized intentionally.
(6) The relationship between the comment data and the image data need not necessarily be unique in terms of data structure. For example, a description contained in a document file such as HTML file may be used as the comment data. In this case, the comment data may be deemed to be related to image data that is located at a predetermined position relative to the comment data, and thereby achieving the image processing of the above embodiment.
(7) In the setting of image processing parameters (Fig. 4), a plurality of selectable modes may be provided. For example, such modes may include: a first mode of using the analysis result of comment data; a second mode of using the parameters based on the scene, and the shooting condition; and a third mode of using the analysis result of comment data, the scene, and the shooting condition. The third mode corresponds to the mode shown as the embodiment in Fig. 4, which may be set by default. The modes may be selectively used according to the user's instruction. If the first mode is selected, the image processing parameters are set without step S30 of Fig. 4. If the second mode is selected, the image processing parameters are set without step S20 of Fig. 4. The plurality of modes may include another mode, and the modes may be selectively used based on the image size, analysis result, scene, and the like.

Although various embodiments of the present invention have been described, it should be noted that the present invention is not limited to these embodiments but may include various configurations without departing from the spirit of the present invention. For example, although the image processing for still image is exemplified in the above embodiment, the present invention is also applicable to a moving image. The application to moving image can be achieved by performing the image processing on each frame included in the moving image based on the metadata corresponding to the frames.

### Industrial Applicability

The present invention may be used to control a content of image processing according to an image represented by image data.

## Claims

1. An image processing device that performs image processing on image data, comprising:
an acquisition module that acquires comment data and the image data, the comment data representing a description of the image data in a human language;
a parameter setting module that analyzes the descriptive content of the comment data so as to set an image processing parameter for the image processing based on the analysis result; and
an image processing module that performs the image processing on the image data according to the image processing parameter.

2. An image processing device according to claim 1, further comprising:
a parameter storage module that stores therein sets of the image processing parameters corresponding to a plurality of image processing modes set in advance,
wherein the parameter setting module selects one of the image processing modes based on the analysis result.

3. An image processing device according to claim 1, further comprising:
a parameter storage module that stores therein sets of the image processing parameters corresponding to a plurality of image processing modes set in advance,
wherein the parameter setting module combines at least two sets of the image processing parameters based on the analysis result so as to set the image processing parameters.

4. An image processing device according to claim 1, further comprising:
a keyword storage module that directly or indirectly associates a predetermined keyword with the image processing parameter in advance,
wherein the parameter setting module extracts the keyword from the comment data and refers to the keyword storage module for the keyword so as to set the image processing parameter.

5. An image processing device according to claim 4, wherein the keyword includes at least one of time information that represents time corresponding to an image represented by the image data and a word relating to the image.

6. An image processing device according to claim 4, further comprising:
a related word storage module that stores therein in advance a relationship that directly or indirectly associates a related word used along with the keyword with the image processing parameter,
wherein the parameter setting module further extracts the related word corresponding to the keyword and refers to the related word storage module for the related word so as to set the image processing parameter.

7. An image processing device according to claim 4, wherein if a plurality of the keywords are extracted, the parameter setting module identifies display formats in which the letter strings of the keywords are displayed, based on the comment data, and modifies an evaluation of each of the keywords according to the display format so as to set the image processing parameter.

8. An image processing device according to claim 1, wherein the acquisition module further acquires image information representing either one of a generation condition of the image data and an analysis result of the image data, and
the parameter setting module further reflects the image information on setting of the image processing parameter.

9. An image processing device according to claim 8, wherein the parameter setting module sets the image processing parameter based on the analysis result, and corrects the image processing parameter based on the generation condition.

10. An image processing device according to claim 9, wherein the generation condition includes information representing a scene of image and information representing a shooting condition, and
the parameter setting module performs the correction based on a result of a predetermined calculation performed using an image processing parameter set based on the scene and an image processing parameter set based on the shooting condition.

11. An image processing device according to claim 10, wherein the predetermined calculation includes weighted average calculation.

12. An image processing device according to claim 1, wherein the acquisition module further acquires a generation condition of the image data, and
the parameter setting module selects one of a first mode and second mode based on a predetermined condition so as to set the image processing parameter, the first mode using one of the analysis result and the generation condition for setting of the image processing parameter, and the second mode using both the analysis result and the generation condition for setting of the image processing parameter.

13. An image processing device according to claim 1, wherein the comment data is included in metadata associated with the image data.

14. An image processing device according to claim 1, wherein the comment data is a descriptive sentence contained in a document file including the image data.

15. An image processing method of causing a computer to perform image processing on image data, comprising the steps of:
acquiring comment data and the image data, the command data representing a description of the image data in a human language;
setting an image processing parameter for the image processing based on an analysis result that is obtained by analyzing the descriptive content of the comment data; and
performing the image processing on the image data according to the image processing parameter.

16. An image processing method according to claim 15, further comprising the step of:
storing sets of the image processing parameters corresponding to a plurality of image processing modes set in advance,
wherein the step of setting the image processing parameter includes selecting one of the image processing modes based on the analysis result.

17. An image processing method according to claim 15, further comprising the step of:
storing sets of the image processing parameters corresponding to a plurality of image processing modes set in advance,
wherein the step of setting the image processing parameter includes combining at least two sets of the image processing parameters based on the analysis result so as to set the image processing parameters.

18. An image processing method according to claim 15, further comprising the step of:
directly or indirectly associating a predetermined keyword with the image processing parameter in advance,
wherein the step of setting the image processing parameter includes extracting the keyword from the comment data and setting the image processing parameter based on the keyword and the association.

19. An image processing method according to claim 18, wherein the keyword includes at least one of time information that represents time corresponding to an image represented by the image data and a word relating to the image.

20. An image processing method according to claim 18, further comprising the step of:
storing in advance a relationship that directly or indirectly associates a related word used along with the keyword with the image processing parameter,
wherein the step of setting the image processing parameter further includes extracting the related word corresponding to the keyword and setting the image processing parameter based on the related word and the relationship.

21. An image processing method according to claim 18, wherein if a plurality of the keywords are extracted, the step of setting the image processing parameter further includes identifying display formats in which the letter strings of the keywords are displayed, based on the comment data, and modifying an evaluation of each of the keywords according to the display format so as to set the image processing parameter.

22. An image processing method according to claim 15, wherein the step of acquiring comment data and the image data further includes acquiring image information representing either one of a generation condition of the image data and an analysis result of the image data, and
the step of setting the image processing parameter further includes reflecting the image information on setting of the image processing parameter.

23. An image processing method according to claim 22, wherein the step of setting the image processing parameter further includes setting the image processing parameter based on the analysis result, and correcting the image processing parameter based on the generation condition.

24. An image processing method according to claim 23, wherein the generation condition includes information representing a scene of image and information representing a shooting condition, and
the step of setting the image processing parameter further includes performing the correction based on a result of a predetermined calculation performed using an image processing parameter set based on the scene and an image processing parameter set based on the shooting condition.

25. An image processing method according to claim 24, wherein the predetermined calculation includes weighted average calculation.

26. An image processing method according to claim 15, wherein the step of acquiring comment data and the image data further includes acquiring a generation condition of the image data, and
the step of setting the image processing parameter further includes selecting one of a first mode and second mode based on a predetermined condition so as to set the image processing parameter, the first mode using one of the analysis result and the generation condition for setting of the image processing parameter, and the second mode using both the analysis result and the generation condition for setting of the image processing parameter.

27. An image processing method according to claim 15, wherein the comment data is included in metadata associated with the image data.

28. An image processing method according to claim 15, wherein the comment data is a descriptive sentence contained in a document file including the image data.

29. A recording medium that stores therein a computer program for performing image processing on image data, the computer program comprising:
a program code for acquiring comment data and the image data, the comment data representing a description of the image data in a human language;
a program code for analyzing the descriptive content of the comment data so as to set an image processing parameter for the image processing based on the analysis result; and
a program code for performing the image processing on the image data according to the image processing parameter.
